# EUROPEAN PATENT SPECIFICATION

(11) **EP 2 045 288 B1**
(45) Date of publication and mention of the grant of the patent: **19.01.2011**
(21) Application number: 08017311.5
(22) Date of filing: 01.10.2008
(51) Int. Cl.: C08L 23/10

(54) **Flame retardant electrical and construction parts**
Flammhemmende Elektro- und Bauteile
Pièces de construction et électriques ignifuges

(30) Priority: 03.10.2007 US 977365 P; 17.09.2008 US 97849 P
(43) Date of publication of application: 08.04.2009
(60) Divisional application: 10169228.3
(73) Proprietor: JJI Technologies, LLC, Mandeville, LA 70471 (US)
(72) Inventor: Diefenthal, James R., Pensacola Beach Florida (US); Reyes, Jose, Newton Pennsylvania 18940 (US)
(74) Representative: HOFFMANN EITLE

(56) References cited:
- WO-A-2004/044049
- US-A1- 2004 012 004
- US-A1- 2004 036 061

## Description

### Background

The computer industry has a long history with styrenics (e.g. HIPS, ABS, or PC/ABS) with the computer housing being the dominant volume application. Styrenic materials have been the standard being used in the hundreds of millions of pounds. These materials are cheap and easily flame retarded with octabromodiphenyl oxide (octabrom), decabromodiphenyl oxide (decabrom) or resorcinol diphenylphosphate (RDP). Polypropylene has historically not been considered for these applications because to date there was no effective flame retardant (FR) system to permit it to be used in these applications.

Additionally, polypropylene is also not as stiff as HIPS, ABS, or PC/ABS. Today, octabrom is gone from the market, decabrom is disappearing, and recycling is becoming a major issue. Using many different materials in computers is not efficient for recycling.

One industry study indicates that industry is replacing plastic with metal or using more expensive inherently flame resistant plastics in order to phase out the halogenated flame retardants.

The same scenario exists for construction boards and tiles. While polypropylene has been used in applications such as construction board and ceiling tiles, it has been cited only as a filler with the strength provided by other components. It is believed that the use of polypropylene in these applications has been limited due to the physical properties of polypropylene itself.

### Summary

This specification discloses a recycle computer housing comprising a composition comprising polypropylene, a non-halogenated flame retardant, a strengthening filler, and an elastomer. It is further disclosed that the polypropylene can be a copolymer and the non-halogenated flame retardant can be selected from the group consisting of nitrogenous phosphates, nitrogenous sulfonates and polyphosphonates.

The composition above may also further comprise a char forming catalyst and the char forming catalyst may be a tetraoxaspiro catalyst or alternatively represented by the following formula I:

R₂-R₁-(Flo)m-R₁-R₂

wherein m represents a number between 1 and 8; R₀ --independently represents a di-, tri-, or quad-valet radical comprising two independently substituted or unsubstituted, saturated or unsaturated heterocyclic ring structures joined by one common carbon atom, wherein the heterocyclic ring structures form a tetraoxaspiro group; R₁-independently represents a bond; or a substituted or unsubstituted, saturated or unsaturated hydrocarbyl or heterocarbyl linking group; and R₂ --independently represents a terminal group. Ethylene diamine phosphate is disclosed as a specific type of flame retardant.

It is also disclosed that the strengthening filler be glass.

It is further disclosed that these compositions above are useful in making computer housings. This article may have at least 50 percent by weight of its composition consist essentially of any of the compositions and be preferably substantially or essentially halogen free.

### Detailed Description

The articles claimed in this specification can be substantially polypropylene, relying in part on the fact that certain polypropylene formulations have the requisite physical properties.

A property of the articles described is that they are recyclable. For example, a recyclable construction board. To be recyclable, at least 50% of the composition of the article must contain the described polypropylene, rubber, flame retardant composition and be void of, free of, or substantially free of halogenated compounds. The requirement that the recyclable material be void of, free of or substantially free of halogenated compounds is well known to one of ordinary skill. The presence of even small amounts of halogenated compounds often destroys the ability of the composition to be re-used. Therefore a recyclable construction board and recyclable computer housing would have at least 50% of its composition be the described polypropylene, rubber, flame retardant composition and be void of, free of, or substantially free of halogenated compounds.

Typically, the width and length of the construction board would be greater than 10.16 cm (4 inches). If one considers the use of the board in ceiling tiles, then a length and width of 0.915 meter (3 feet) and 0.305 meter (1 foot) would be typical.

The depth, or thickness, of the board depends upon the end use. However, when used as a ceiling tile in computer control rooms, thicknesses from 0.318 cm (0.125 inch) to 5.08 cm (2 inch) are typical. If the ceiling tile is intended to be sound dampening, then the construction board can be a foamed polypropylene core attached to at least one unfoamed side.

The ceiling tile application or construction board would replace the polyvinylchloride (PVC) and other types of boards used today. Because flame retardancy is a concern, a flame retardant for polypropylene is to be used. The flame retardant properties are achieved by adding a flame retardant compound. While it may be common to use halogenated compounds, the use of non-halogenated compounds is preferred. Brominated compounds are typical halogenated compounds. While phosphates may be known, phosphates with a char catalyst are not.

It is desired that the articles using this composition be essentially or substantially halogen free, e.g., bromine free, which for the purposes of this disclosure means that the composition has less than about 500 ppm by weight of the halogens, preferably less than 250 ppm by weight of the halogens, e.g., bromine, in the total composition. The composition could also be halogen free or otherwise contain no halogens.

Recyclable computer housing as used in this specification refer to an article shaped into a form having at least two sides, such as L shaped article. The preferred embodiment of the housing is a shape with 5 sides which define a volume into which a computer can be inserted or housed. The sixth side is usually attached. As one decomposes the housing, the shaped part can be three sided with the remaining sides attached. The permutations become endless, so that even a single panel, similar to the construction board, may be useful as a recyclable computer housing when it is attached to another panel. Therefore, the housing describes the article which has been shaped or attached to another article of similar composition to form at least a portion of the two sides of a recyclable computer housing.

A useful flame retardant material includes a nitrogenous phosphate or sulfonate component formed in the presence of a char catalyst. The nitrogenous phosphate or sulfonate component may be formed using any of the conventional techniques with the char catalyst being introduced at least in part prior to the formation of the final product. For example, the char catalyst may be introduced either in total or in part with one or more of the nitrogen containing compounds and then have the phosphorus or sulfur containing compound reacted in. These nitrogenous phosphate or sulfonate components may also be formed by introducing parts of one or more of the reactants in steps. For example, a portion of the total amount of the nitrogen containing reactant may be added to a portion of the activator followed by a portion' of the phosphorus or sulfur containing reactant and then repeated in any order and in as many steps as desired to obtain the final activated flame retardant.
The selection of the nitrogen containing reactant and the phosphorus or sulfur containing reactant used can depend upon the application. Suitable reactants include those known for use in forming nitrogenous phosphate or sulfonate flame retardants, for example, ammonium phosphate, ammonium pyrophosphate, ammonium polyphosphate, ethylene-diamine phosphate, piperazine phosphate, piperazine-pyrophosphate, melamine phosphate, dimelamine phosphate, melamine pyrophosphate, guanidine phosphate, dicyanodiamide phosphate urea phosphate, ammonium sulfonate, ammonium polysulfonate, ethylenediamine sulfonate, dimelamine sulfonate, guanidine sulfonate, and dicyanodiamide sulfonate. For example, suitable nitrogen containing reactants include ammonium, alkyleneamines (including diamines), triazine, melamine, melam, melem, melon, ammeline, ammelide, 2-ureidomelamine, acetoguanamine, benzoguanamine, quanidine, dicyanodiamide, diamine phenyltriazine or mixtures hereof. Preferred nitrogen containing reactants include melamine, ammonium, and ethylene diamine. Examples of suitable phosphorus or sulfur containing reactants include phosphoric acid and sulfonic acid.

The char catalyst is a component that often enhances the performance of the nitrogenous phosphate and/or sulfonate component and preferably is a char forming catalyst or a phase transfer agent or a combination of both. The char catalyst can be present in the flame retardant in any amount that provides the acceptable enhanced flame retardancy, for example up to 5, 8 or 10 wt % and as little as 0.01, 0.1 and 0.2 wt %. It is preferred to use both a char forming catalyst and a phase transfer catalyst together these may be present in the flame retardant in an amount between 0.1, preferably 0.3, and 3.0, preferably 2.5 wt %, based on the total weight of the flame retardant.

Although not wishing to be bound by any particular theory, it is believed that the char forming catalyst may act, at the time of decomposition of part of the system, to "grab onto" or react with decomposing molecules, thereby minimizing the production of low molecular weight components that can burn. This it is believed generally enables the development of char rather than burn. Consequently, exemplary char forming catalysts include multi-cyclic compounds having at least one reactive group in each of at least two rings. Typically, the rings are joined together by atoms common to both rings. These may include spiro-compounds. For example, the spiro compounds can define at least two heterocyclic ring structures, e.g., that each includes oxygen, joined by at least one carbon atom common to both rings.

Preferred char forming catalyst include spiro-compounds represented by the following formula I:

R₂-R₁-(R₀)m-R₁-R₂

where m represents a number between 1 and 8, for example less than 3 or less than 2; R₀ --independently represent a di- tri-, or quad-valent radical including two independently substituted or unsubstituted, saturated or unsaturated heterocyclic ring structures joined by at least one common carbon atom and preferably no more than two, for example one, carbon atoms common to the heterocyclic ring structures; R₁--independently represents a bond; or a substituted or unsubstituted, saturated or unsaturated hydrocarbyl or heterocarbyl linking group, preferably a C1-C6 alkyl linking group, for example a C3 alkyl; and R₂ --independently represents a terminal group, preferably a terminal amine for example a primary amine.

Exemplary compounds include those in which the heterocyclic ring structure comprises at least two heteroatoms in at least two heterocyclic ring structures, and/or R₀ independently represents a divalent radical, preferably with at least one, for example, two (including two adjacent), heterocyclic ring structures being 6-member. These compounds may also include those in which the heteroatom in the heterocyclic rings is predominately oxygen.

The preferred char catalyst includes those having a molecular weight of at least 180, preferably at least 200 and/or a flash point of greater than 200 °C.
Some preferred embodiments include one or more tetraoxaspiro materials, such as derivatives of a tetraoxaspiro undecane (e.g., amine derivatives), such as one or more 2,4,8,10-tetraoxa-spiro[5.5]undecane compounds and/or one or more 1,5,7,11-tetraoxa-spiro[5.5]undecane compounds. The char forming catalyst component may also include adducts, for example, amine adducts, nitrile adducts (including 2-propenenitrile or acrylonitrile) and/or oxirane adducts (including butoxymethyl oxirane). 2,4,8,10-tetraoxaspiro[5.5]undecane-3,9-dipropanamine with an amine or nitrile adduct, such as acrylonitrile is a specific example.

The phase transfer agent utilized can be or can include tetrahydrocarbyl ammonium salts, for example, tetramethyl, tetraethyl, tetrapropyl, tetralkyl, and/or aryltrialkyl ammonium salt in which the salt is a bromide, chloride, hydroxide and/or hydrogen sulfate ammonium salt. Preferably, the phase transfer catalyst includes phosphate esters, tetraethylammonium bromide, tetraethylammonium hydroxide, tetrapropylammonium bromide, tetrabutyl ammonium bromide, tetrabutyl ammonium hydroxide, tetrabutyl ammonium hydrogen sulfate and/or benzyltriethyl ammonium chloride.

An exemplary retardant may be prepared as follows.
To 900 grams of water, while under agitation, add 180 grams of ethylene diamine, 60 grams of melamine and 0.5 wt percent by finished recovered product of 2,4,8,10-tetraoxaspiro[5.5]undecane-3,9-dipropanamine adduct with 2-propenenitrile (acrylonitrile), which is commercially available from Ajinomoto, Inc. under the tradename YSE-CURE B-001. The mixture was warmed to 170°F and, while maintaining temperature, phosphoric acid is slowly added until a pH of 7.0 was reached. The mixture is cooled, filtered, dried and ground to recover the flame retardant.

One of ordinary skill can easily modify the above technique to achieve a preferred ratio of 80:20 ethylene diamine phosphate to melamine phosphate.

This flame retardant can be present in amounts ranging from about 15 to about 85% by weight of the total composition. The char forming catalyst will therefore be present in the insulative wall in amounts ranging from about 0.15 weight percent to about 8.5 weight percent.

Another flame retardant believed suitable is found in United States Patent No. 6,861,499. United States Patent No. 6,861,499 teaches how to prepare branched polyphosphonates. The branched polyphosphonates can be produced by: placing a molar excess of a phosphonic acid diaryl ester, one or more bisphenols including 2,2-bis(4-hydroxyphenyl)propane, a branching agent, and a phosphonium catalyst into a reaction vessel; heating the mixture in the vessel under vacuum to a temperature where phenol beings to distill from the vessel; and heating the reaction mixture until the evolution of phenol has stopped. The polyphosphonate can also comprise a molar excess of phosphonic acid diaryl ester relative to the amount of 2,2-bis(4-hydroxyphenyl) propane, a branching agent, and a phosphonium catalyst having a substituted or unsubstituted phenolate anion combined in a reaction vessel and heated under reduced pressure to a temperature where phenol distills from a melt in the vessel; and heating the melt until the viscosity of the melt increases.
The branched polyphosphonate can also comprise a molar excess of phosphonic acid diaryl ester relative to the amount of 2,2-bis(4-hydroxyphenyl) propane and another bisphenol, a branching agent, and a phosphonium catalyst having a substituted or unsubstituted phenolate anion combined in a reaction vessel and heated under reduced pressure to a temperature where phenol distills from a melt in the vessel; and heating the melt until the viscosity of the melt increases.

Preferably, computer housing should have less than 250 ppm halogen by weight of the article, with being completely halogen free the most preferred embodiment.

A thermoplastic elastomer (rubber) compound is added to improve the elongation properties. Table I shows the properties of a typical acceptable thermoplastic elastomer or rubber compound..

| PROPERTY | | NOMINAL VALUE | UNITS | ASTM TEST METHOD |
|---|---|---|---|---|
| Melt Flow Rate 190 °C/2.16 kg | | 0.5 | g/10 min. | D 1238 |
| Density | | 0.868 | g/cm³ | D 792 |
| Mooney Viscosity | | 33 | ML 1+4 @ 121°C | D 1646 |
| Tensile | | | | |
| | Yield | 9.5 | MPa | |
| | Ultimate Elongation | 810 | % | D 638 |
| | 100% Modulus | 2.6 | MPa | |
| Flexural Modulus | | | MPa | D 790 |
| | 1% Secant | 15.2 | | |
| | 2% Secant | 14.4 | | |
| Tear Strength | | 37.3 | kN/m | 37.3 |
| Vicat Softening Point | | 46 | °C | D 1525 |
| Hardness | | | | D 2240 |
| | Shore A | 15.2 | | |
| | Shore B | 14.4 | | |
| Glass Transition | | -52 | °C | |
| Melt Point | | 55 | °C | |

These typical properties can be found in a material known as ENGAGE 8150 from The DOW Chemical Company, (Midland, Michigan, USA), which is also known as an ethylene-octene copolymer. The presence of the elastomer may range from about 15 to about 85 percent by weight of the total composition of the construction board. Satisfactory results can be achieved, e.g., at amounts in the ranges of about 15 to about 45 percent by weight, and about 20 to about 35 percent by weight. ENGAGE 8180, also obtained by Dow, works as well. Styrenic block copolymers, such as SEBS (Styrene - Ethylene - Butadiene - Styrene) and SBS (Styrene-Ethylene-Styrene) polymers work as well, which are available from KRATON and from GLS Corporation.

Other ingredients, such as fillers, and other processing aids, such as antioxidants (e.g., the Irganox family of antioxidants available from CIBA) may be of benefit. These other ingredients include, but are not limited to, hindered phenolic stabilizers like tetrakis((methylene (3,5-di-tert-butyl-4 hydroxyhydrocinnamate))methane (e.g., Ciba Specialty Chemicals Irganox 1010), acid scavengers and hydrotalcite-like materials (e.g., DHT 4A from Kyowa Chemicals, Japan, Kisuma Chemicals, Netherlands, and Mitsui), endothermic agents such as, but not limited to, magnesium hydroxide (e.g., FR-20 from Dead Sea Bromine Group), zinc borate and the like and UV absorbers from the benzophenone family.

A metal deactivator can be added, e.g., to improve long term heat stability of the compositions. Hydrotalcite is typical deactivator. Hydrotalcite is a natural mineral with a white collar in pearl like luster. Hydrotalcite is a compound of magnesium and aluminum with a layer structure of the following formula composition's DHT-4A available from Mitsui, Japan, is a preferred metal deactivator. DHT-4 {Mg_{4.3}Al₂(OH)₁₂.₆CO3-mH₂O}is a hydrotalcite-like compound used as a stabilizer (halogen scavenger) for polyolefin and other plastics. Hydrotalcite {Mg₆Al₂(OH)₁₆CO₃-4H₂O} is a natural mineral that is mined, e.g., in the Ural area of Russia and Sunarum area of Norway.

1,2-bis(3,5-di-tert-butyl-4hydroxyhydrocinnamoyl)hydrazine (available as Irganox MD1024 from CIBA-Giegy, Switzerland) is another metal de-activator. The role of the metal deactivator is, e.g., to quench the activity of the metal catalyst(s) often found in thermoplastics.
Two embodiments of the polypropylene material used to make the board or computer housing is in Table II.

**TABLE II - Embodiments**

| **Supplier** | **Trade Name** | **Description** | **% wt of composition (Form 1 / Form 2)** |
|---|---|---|---|
| Phillips Sumika, Woodlands, Tx | Marlex® ALN-070 | Polypropylene Impact Copolymer, 7 g/10min Melt Flow ASTM1505 | 34.67/37.4 |
| Dow Chemical Co, Midlands, MI. | ENGAGE® 8150 | ethylene-octene copolymer | 20.50/13.5 |
| Trillium Specialties, LLC, Elm Grove WI | TrilWax™ EBS | Ethylene Bis-Stearamide | 0.50/0.0 |
| MF Cachat | Irganox 1010 | tetrakis((methylene (3,5-di-tert-butyl-4 hydroxyhydrocinnamate)) methane | 0.50% / 0.5 |
| Kisuma Chemcials, B.V, Netherlands | Kisuma DHT4-A® | MgO, Al₂O₃ hydrotalcite compound, mole ratio 4.5 | 0.50% / 0.5 |
| MF Cachat | Irganox MD 1024 | 1,2-bis(3,5-di-tert-butyl-4hydroxyhydrocinnamoyl) hydrazine | 0.30% / 0.3 |
| | | Flame Retardant, 80:20 ethylene diamine phosphate to melamine phosphate described in specification | 31.00% 32.8 |
| Trillium Specialties, LLC, Elm Grove WI | Trilsperse 800 | Dispersion Aid like Ca Stearate | 2.00% / 0.0 |
| Cabot Corporation, Boston, MA | CAB-O-SIL® TS 720 | Treated Fumed Silica | 0.03/0.0 |
| PPG, USA | HP 2799 Glass | E-Glass fiber meeting ASTM D 578-98, paragraph 4.2.2 having a nominal diameter of 13.7 micron and 3.2mm standard cut length. | 10.00/0.0 |
| PPG, USA | HP 3299 | Glass Fibers | 0.0/15.0 |

The above formulation 1 was used to make the 10% glass filled polypropylene formulation. The control formula without glass used the same ratios, only no glass. The 15% by weight glass in Table II was made using the same ratios for the non-glass components.

One can increase the stiffness of the polypropylene board. This can be done by adding a non-decomposing strengthening filler. Glass fibers, glass beads, carbon fibers, carbon nano-tubes are examples of such fillers. The following table demonstrates the surprising effect of glass filler on one embodiment. One would have expected a stiff material to break when glass fillers are added. Instead as the data show, 15% glass can be added with no breakage.

**Table III - RESULTS**

| Property | Method | No Glass | 10% Glass | 15% Glass |
|---|---|---|---|---|
| Tensile Strength (Yield) (psi) | ASTM D638 | 2000 | 2080 | 2430 |
| Tensile Strength (Break) (psi) | ASTM D638 | | 1320 | 1680 |
| Tensile Elongation (Yield) (%) | ASTM D638 | | 3 | 1.3 |
| Tensile Elongation (Break) (%) | ASTM D638 | 400 | 13 | 6.5 |
| Tensile Modulus (10⁵ psi) | ASTM | 1.47 | 3.57 | 4.85 |
| Izod Impact, Notched (ft-lb/in) | ASTM D256 | No Break | No Break | No Break |
| Flammability, Vertical Burn | UL-94 | V-0 | V-0 | V-0 |

In the claimed composition, the ingredients are a strengthening filler, flame retardant, and a rubber such as EPDM, or ethylene-octene copolymer.

For the purpose of this specification, the phrase strengthening filler means a single component or mixture of strengthening fillers compounds. The strengthening filler is generally inorganic and can be of any type, with talc, mica, fiberglass and glass beads being the most preferred. The amount of filler is preferably within the range of 2.5 to 45 weight percent of the composition, more preferably 5.1 to 40 weight percent of the composition, even more preferably 7.6 to 34.9 weight percent of the composition, with 10.1 to 29.9 weight percent and 5.1 to 29.9 weight percent the most preferred ranges. It should be recognized that the strengthening filler is not needed for flexible applications, such as the insulating wall of a cable.

For the purpose of this specification, the phrase flame retardant means a flame retardant or mixture of flame retardant compounds. As discussed previously, the flame retardant is halogen free or essentially halogen free and is present in the range of 15.1 to 49.9 weight percent of the composition, with 19.9 to 44.9 weight percent of the composition being more preferred, 19.9 to 39.9 weight percent of the composition being even more preferred and 25.1 to 39.9 weight percent of the composition being the most preferred range.

The flame retardant can be selected from the group consisting of nitrogenous phosphates, nitrogenous sulfonates and polyphosphonates and have a char forming catalyst

For the purpose of this specification, the phrase rubber means a rubber or mixture of rubber compounds. For the rubber, also known as a thermoplastic elastomer or elastomer, the ethylene-octene copolymers are preferred. The amount of rubber is preferably within the range of 2.6 to 34.9 weight percent of the composition, more preferably 5.1 to 29.9 weight percent of the composition, even more preferably 7.4 to 24.9 weight percent of the composition, with 10.1 to 24.9 weight percent the most preferred range.

For the purpose of this specification, the phrase polypropylene means a single polypropylene or a mixture of polypropylenes. The preferred polypropylene is the copolymer, having a 7 gm/min melt flow according to ASTM D 1505. However, polypropylenes with melt flows in the ranges of 3 to 12 gm/min, 5 to 10 gm/min and 6 to 9 gm/min are believed suitable. The amount of polypropylene in the composition should be in the range from 15.1 to 59.9 weight percent of the composition, with 19.9 to 54.9 weight percent of the composition being more preferred, 20.1 to 50.1 weight percent of the composition being even more preferred, with 25.1 to 44.9 weight percent of the composition being the most preferred range.

The other ingredients are optional and are added for processing aids, stabilization, and the like.

One of ordinary skill will realize that the sum of all the weight percentages of the composition will be 100 and that the amount of the strengthening filler, the amount of the rubber, the amount of the flame retardant and the amount of the polypropylene will be selected so that sum of the percent of the strengthening filler, the percent of the rubber, the percent of the flame retardant and the percent of the polypropylene will be greater than 0 but less than or equal to 100. Of course, as described earlier, the strengthening filler may not be present in some articles.

## Claims

1. A recyclable computer housing comprising a composition comprising a polypropylene, a non-halogenated flame retardant, an elastomer and a strengthening filler;
wherein the polypropylene is present in the amount of 15.1 to 59.9 weight percent of the total composition, the non-halogenated flame retardant is present in the amount of 15.1 to 49.9 weight percent of the total composition, the elastomer is present in an amount of 2.6 to 34.9 weight percent of the total composition and the strengthening filler is present in the amount of 2.5 to 45 weight percent of the total composition, and the amount of the polypropylene, the non-halogenated flame retardant and the elastomer are selected so that the sum of the weight percent of the non-halogenated flame retardant, the weight percent of the elastomer and the weight percent of the polypropylene are greater than 32.8 and less than or equal to 100.

2. The recyclable computer housing of claim 1, wherein the non-halogenated flame retardant is selected from the group consisting of nitrogenous phosphates, nitrogenous sulfonates and polyphosphonates.

3. The recyclable computer housing according to any of claims 1 through 2, wherein the composition further comprises a char forming catalyst.

4. The recyclable computer housing according to claim 3, wherein the char forming catalyst is a tetraoxaspiro catalyst.

5. The recyclable computer housing according to claim 4, wherein the char forming catalyst is represented by the following formula I:
R₂-R₁-(R₀)m-R₁-R₂
wherein m represents a number between 1 and 8; R₀ --independently represents a di-, tri- or quad-valent radical comprising two independently substituted or unsubstituted, saturated or unsaturated heterocyclic ring structures joined by one common carbon atom, wherein the heterocyclic ring structures form a tetraoxaspiro group; R₁ --independently represents a bond; or a substituted or unsubstituted, saturated or unsaturated hydrocarbyl or heterocarbyl linking group; and R₂ --independently represents a terminal group.

6. A recyclable computer housing according to any of claims 1 through 5, wherein the flame retardant compound is ethylene diamine phosphate.

## Patentansprüche

1. Wiederverwendbares Computergehäuse, das eine Zusammensetzung umfasst, die ein Polypropylen, ein nicht-halogeniertes Flammschutzmittel, ein Elastomer und einen stärkenden Füller umfasst;
wobei das Polypropylen in einer Menge von 15,1 bis 59,9 Gew.% bezogen auf die Gesamtzusammensetzung vorliegt, das nicht-halogenierte Flammschutzmittel in einer Menge von 15,1 bis 49,9 Gew.% bezogen auf die Gesamtzusammensetzung vorliegt, das Elastomer in einer Menge von 2,6 bis 34,9 Gew.% bezogen auf die Gesamtzusammensetzung vorliegt und der stärkende Füller in einer Menge von 2,5 bis 45 Gew.% bezogen auf die Gesamtzusammensetzung vorliegt und die Menge des Polypropylen, des nicht-halogenierten Flammschutzmittels und des Elastomers so ausgewählt ist, dass die Summe aus dem Gewichtsprozent des nicht-halogenierten Flammschutzmittels, dem Gewichtsprozent des Elastomers und dem Gewichtsprozent des Polypropylen größer als 32,8 und geringer oder gleich 100 ist.

2. Wiederverwendbares Computergehäuse gemäß Anspruch 1, wobei das nicht-halogenierte Flammschutzmittel aus Stickstoff-haltigen Phosphaten, Stickstoff-haltigen Sulfonaten und Polyphosphonaten ausgewählt ist.

3. Wiederverwendbares Computergehäuse gemäß irgendeinem der Ansprüche 1 bis 2, wobei die Zusammensetzung weiterhin einen Kohle-bildenden Katalysator umfasst.

4. Wiederverwendbares Computergehäuse gemäß Anspruch 3, wobei der Kohle-bildende Katalysator ein Tetraoxaspiro-Katalysator ist.

5. Wiederverwendbares Computergehäuse gemäß Anspruch 4, wobei der Kohle-bildende Katalysator durch die folgende Formel (I) dargestellt ist:
R₂-R₁-(R₀)m-R₁-R₂
wobei m eine Zahl zwischen 1 und 8 ist; R₀ unabhängig ein di-, tri- oder quad-valentes Radikal ist, das zwei unabhängig substituierte oder unsubstituierte, gesättigte oder ungesättigte heterocyclische Ringstrukturen umfasst, die durch ein gemeinsames Kohlenstoffatom verbunden sind, wobei die heterocyclischen Ringstrukturen eine Tetraoxaspirogruppe bilden; R₁ unabhängig eine Bindung ist oder eine substituierte oder unsubstituierte, gesättigte oder ungesättigte Kohlenwasserstoff- oder Heterokohlenwasserstoff-Verknüpfungsgruppe ist; und R₂ unabhängig eine Terminalgruppe ist.

6. Wiederverwendbares Computergehäuse gemäß irgendeinem der Ansprüche 1 bis 5, wobei die Flammschutzmittelverbindung Ethylendiaminphosphat ist.

## Revendications

1. Boîtier d'ordinateur recyclable comprenant une composition qui contient du polypropylène, une substance ignifuge non-halogénée, un élastomère et une matière de remplissage de renforcement ;
dans lequel le polypropylène est présent selon une proportion de 15,1 à 59,9 pourcent en poids de la composition totale, la substance ignifuge non-halogénée est présente selon une proportion de 15,1 à 49,9 pourcent en poids de la composition totale, l'élastomère est présent selon une proportion de 2,6 à 34,9 pourcent en poids de la composition totale et la matière de remplissage de renforcement est présente selon une proportion de 2,5 à 45 pourcent en poids de la composition totale, et la quantité du polypropylène, de la substance ignifuge non-halogénée et de l'élastomère est choisie de sorte que la somme du pourcentage en poids de la substance ignifuge non-halogénée, du pourcentage en poids de l'élastomère et du pourcentage en poids du polypropylène soit supérieure à 32,8 et inférieure ou égale à 100.

2. Boîtier d'ordinateur recyclable de la revendication 1, dans lequel la substance ignifuge non-halogénée est sélectionnée du groupe constitué de phosphates azotés, de poly-phosphonates et de sulfonates azotés.

3. Boîtier d'ordinateur recyclable selon l'une des revendications 1 à 2, dans lequel la composition comprend en outre un catalyseur de formation de charbon.

4. Boîtier d'ordinateur recyclable selon la revendication 3, dans lequel le catalyseur de formation de charbon est un catalyseur tétra-oxaspiro.

5. Boîtier d'ordinateur recyclable selon la revendication 4, dans lequel le catalyseur de formation de charbon est représenté par la formule I suivante :
R₂-R₁-(R₀)m-R₁-R₂
où m représente un nombre entre 1 et 8 ; R₀ représente indépendamment un radical di-, tri- ou quadrivalent comprenant deux structures en anneaux hétérocycliques indépendamment substituées ou non substituées, saturées ou insaturées jointes par un atome de carbone commun, où les structures en anneaux hétérocycliques forment un groupe tétra-oxaspiro ; R₁ représente indépendamment une liaison ; ou un groupe de liaison d'hétérocarbyle ou d'hydrocarbyle substitué ou non substitué, saturé ou insaturé et R₂ représente indépendamment un groupe terminal.

6. Boîtier d'ordinateur recyclable selon l'une des revendications 1 à 5, dans lequel le composant ignifuge est du phosphate d'éthylène diamine.
